# FASCICULE DE BREVET EUROPEEN

(11) **EP 3 481 673 B1**
(45) Date de publication et mention de la délivrance du brevet: **16.02.2022**
(21) Numéro de dépôt: 17746532.5
(22) Date de dépôt: 27.06.2017
(51) Int. Cl.: B60R 13/02

(54) **SYSTEME DE COIFFE POUR LEVIER DE COMMANDE DE TRANSMISSION D'UN VEHICULE AUTOMOBILE**
ABDECKSYSTEM FÜR DEN SCHALTKNÜPPEL EINES KRAFTFAHRZEUGS
COVER SYSTEM FOR THE GEAR STICK OF A MOTOR VEHICLE

(30) Priorité: 05.07.2016 FR 1656390
(43) Date de publication de la demande: 15.05.2019
(73) Titulaire: PSA Automobiles SA, 78300 Poissy (FR)
(72) Inventeur: BARD, Sebastien, 70000 Vellefaux (FR); THIEL, Marc, 25400 Exincourt (FR); VALDUGA, Frederic, 25200 Montbeliard (FR)
(86) Numéro de dépôt international: PCT/FR2017/051714
(87) Numéro de publication internationale: WO 2018/007719

(56) Documents cités:
- FR-A1- 2 868 996
- FR-A1- 2 913 375
- JP-A- 2001 246 958
- JP-U- H01 116 736
- JP-U- H02 149 321

## Description

La présente invention concerne un système de coiffe pour un levier de commande de transmission d'un véhicule automobile, ainsi qu'un véhicule automobile comprenant un levier de commande recouvert par un tel système de coiffe.

Les véhicules automobiles comportent généralement un levier de commande de la transmission disposé dans l'habitacle sur la console centrale, qui peut commander les passages des rapports d'une boîte de vitesses du type manuel, ou les différentes positions de roulage d'une boîte de vitesses automatique.

Le levier de commande comporte une tige sortant d'une ouverture réalisée sur une partie sensiblement horizontale de la console centrale, présentant à son extrémité supérieure un pommeau ergonomique pour faciliter sa prise en main.

On dispose généralement un soufflet ou une coiffe reliant le contour de l'ouverture de la console à la partie supérieure de la tige du levier, sous le pommeau, afin de fermer cette ouverture qui doit être assez grande pour permettre les débattements du levier dans les différentes directions.

Un type de soufflet connu, présenté notamment par le document FR-B1-2883517, comporte une embase circulaire ajustée à l'intérieur d'un contour lié à la console. Un ressort circulaire de placage disposé à l'intérieur du soufflet, applique une pression constante vers l'extérieur sur ce soufflet afin de pénétrer dans une gorge circulaire réalisée à l'intérieur du contour lié à la console.

On obtient de cette manière un maintien régulier de la base du soufflet dans le contour circulaire.

Toutefois certains véhicules disposent d'une façade posée au-dessus de la console, comportant l'ouverture pour la tige du levier entourée de faces sensiblement planes que la base de la coiffe doit aussi couvrir en restant plaquée dessus, afin d'assurer une continuité et une bonne esthétique à l'ensemble.

La coiffe peut être réalisée en particulier avec des matériaux nobles, comme du tissu enduit de matière plastique formant un similicuir, du cuir, ou de l' « Alcantara » (marque déposée), qui est un tissu composite préparé à partir de fibres synthétiques à base de polyester et de polyuréthane.

Pour maintenir la base de la coiffe à plat sur les faces planes autour de l'ouverture, une solution connue consiste à coller cette base sur les faces, en laissant la partie centrale de la coiffe libre pour monter sous le pommeau et permettre les mouvements du levier.

Toutefois le matériau souple de la coiffe collé sur les faces planes peut présenter des irrégularités de surface. De plus pour des fabrications en grande série l'opération de collage est relativement longue et délicate à effectuer, et demande une qualification des opérateurs pour obtenir une qualité constante. Le coût de cette opération est élevé.

Par ailleurs le collage de la base de la coiffe donne une forte rigidité au matériau de cette coiffe, alors que la façade et ce matériau peuvent présenter des modifications dimensionnelles avec les variations climatiques, entraînant un vieillissement accéléré générant des défauts de présentation ou des décollements. Le cuir notamment évolue en fonction de la température et de l'humidité.

La présente invention a notamment pour but de résoudre ces problèmes de l'art antérieur.

On connait par ailleurs des documents JP H02 149321 U, JP H01 116736 U, JP 2001 246958 A et FR 2 913 375 A1, un système de coiffe conforme au préambule de la revendication 1.

La présente invention propose un système de coiffe pour un levier de commande de transmission disposé sur une console de l'habitacle d'un véhicule automobile, conforme à la partie caractérisante de la revendication 1.

Dans ce cas, avantageusement les pièces rapportées formant les languettes sont fixées à la coiffe par des coutures attachant différentes parties en matériaux souples de cette coiffe entre elles.

Le système de coiffe selon l'invention peut comporter de plus une ou plusieurs des caractéristiques suivantes, qui peuvent être combinées entre elles.

Avantageusement, les languettes peuvent être élastiques.

Avantageusement, les languettes comportent des perçages de fixation sur des crochets de la façade.

Avantageusement, les languettes sont reliées à la coiffe au niveau de coutures attachant différentes parties de cette coiffe entre elles.

En particulier, la façade peut comporter à l'avant ou à l'arrière une face sensiblement plane transversale recouverte.

Dans ce cas, avantageusement la coiffe comporte une partie arrière, deux parties latérales et une partie avant, les languettes étant au bord de coutures reliant les parties latérales à cette partie arrière ou avant.

En particulier, le système peut comporter des languettes disposées de manière symétrique par rapport à un plan longitudinal du véhicule.

L'invention a aussi pour objet un véhicule automobile équipé d'un levier de commande d'une transmission disposé sur une console de l'habitacle, remarquable en ce que ce levier de commande est recouvert par un système de coiffe comprenant l'une quelconque des caractéristiques précédentes.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 présente un système de coiffe selon l'invention monté sur un levier de commande ;
- la figure 2 présente en vue de dessus la façade de ce système de coiffe ;
- la figure 3 présente en vue de côté la coiffe de ce système de coiffe ;
- la figure 4 présente la partie arrière et une partie de côté de cette coiffe avant la réalisation des coutures ;
- la figure 5 présente à l'intérieur de la coiffe cousue, les languettes de traction ; et
- la figure 6 est une vue en coupe de ce système de coiffe, suivant le plan de coupe VI-VI.

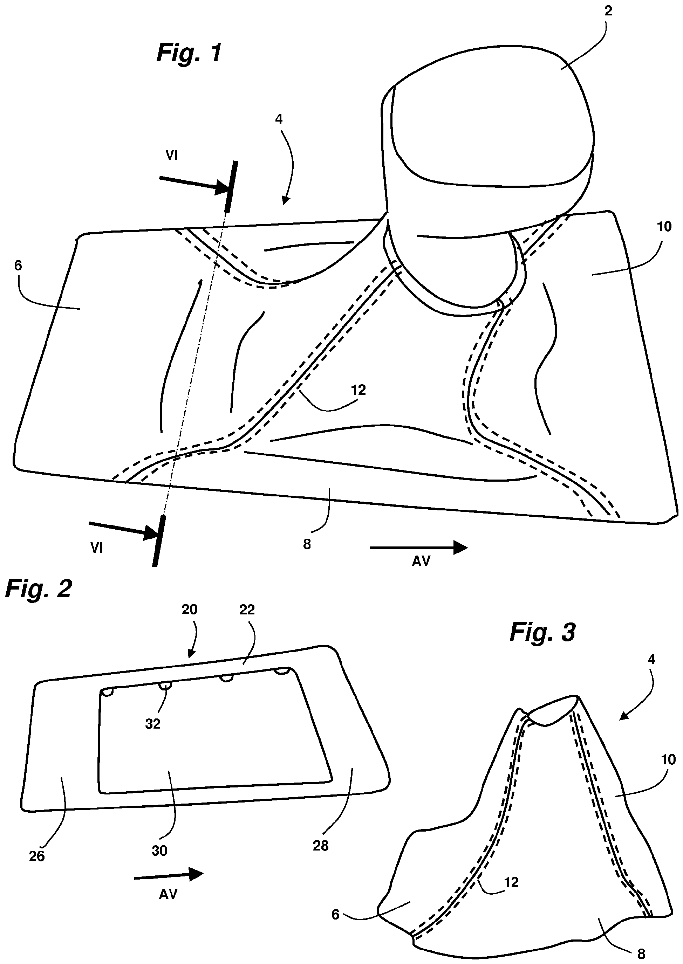

La figure 1 présente une coiffe 4 en cuir, comportant une partie arrière 6, deux parties latérales 8 et une partie avant 10 assemblées par des coutures 12, formant une cheminée allongée vers le haut recouvrant la tige d'un levier de commande d'une transmission comprenant un pommeau 2 venant juste au-dessus de cette coiffe.

Le côté avant du véhicule est indiqué par la flèche notée « AV », tournée suivant un axe longitudinal de ce véhicule.

Les coutures 12 comportent une première couture reliant les deux parties entre elles, puis de chaque côté de cette première couture une couture parallèle qui replie le bord de la partie sur la partie elle-même. On obtient ainsi deux coutures parallèles décoratives de chaque côté de la ligne reliant deux parties.

La figure 2 présente une façade 20 de forme rectangulaire allongée dans le sens longitudinal du véhicule, comportant une ouverture centrale 30 de forme rectangulaire laissant de chaque côté une barrette latérale 22 présentant en dessous et vers l'intérieur des crochets 24 prévus pour la fixation de la base de la coiffe 4.

L'ouverture centrale 30 de la façade 20 moulée en matière plastique, reçoit la tige du levier de commande en permettant ses débattements.

La façade 20 comporte de chaque côté de l'ouverture centrale 30, sur toute la largeur de cette façade, une face arrière transversale 26 et une face avant transversale 28 moins large, qui sont sensiblement plates.

La figure 3 présente la coiffe seule 4, formant avant son assemblage une forme globalement pyramidale présentant une base élargie. La base des partis arrières 6 et avant 10 est prévue pour recouvrir respectivement la face arrière 26 et avant 28 de la façade 20, en venant se plaquer dessus de manière à assurer une esthétique soignée.

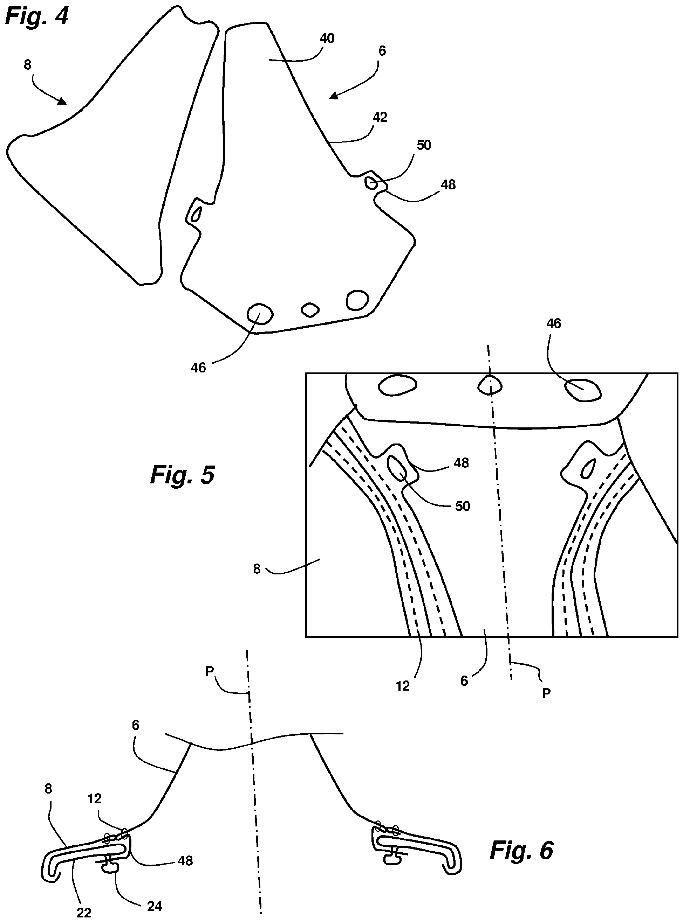

Les figures 4 et 5 présentent la partie arrière de la coiffe 6 comportant une forme supérieure élancée 40 formant la cheminée, comprenant de chaque côté un bord 42 qui descend en s'élargissant, présentant dans sa partie inférieure une languette de traction 48 tournée vers l'extérieur.

De chaque côté de la partie arrière 6, après la couture du bord 42 sur la partie latérale 8, la languette de traction 48 est tournée vers le plan médian longitudinal P de la coiffe 4.

Chaque languette 48 comporte un perçage 50 formant une boutonnière prévue pour l'accrochage en dessous de la façade 20, sur le premier crochet 24 en avant de la face arrière transversale 26. La base de la partie arrière 6 comporte aussi des perçages 46 prévus pour l'accrochage à des crochets 24 en dessous de la façade 20.

La figure 6 présente la coiffe comportant de chaque côté juste en avant de la face arrière transversale 26, la base de la partie arrière 8 posée sur la barrette latérale 22, la partie latérale 6 montant pour former la cheminée.

Après l'installation de la coiffe 4 sur la façade 20, on tire sur chaque languette 48 pour insérer le premier crochet 24 en avant de la face arrière transversale 26, dans la boutonnière 50 de cette languette.

On obtient alors de chaque côté de la coiffe 4 un placage de toute la base de la partie arrière 8, jusqu'à la couture 12, par les tractions symétriques sur les deux languettes 48. La couture 12 comportant une certaine rigidité, transmet ensuite la tension de la languette 48 sur une certaine hauteur de la partie arrière 6, ce qui répartit cette tension.

La base de la partie arrière 8 étant elle-même tendue vers l'arrière par les crochets 24 engagés dans les perçages 46 de cette partie, toute la surface de la face arrière transversale 26 est ainsi recouverte par une couche de matériau souple qui reste plaquée dessus.

De la même manière on réalise un placage de la base de la partie avant 10 de la coiffe 4, sur la partie transversale avant 28 de la façade 20, pour obtenir par symétrie une façade proprement recouverte.

On notera que le procédé d'assemblage de la coiffe 4 sur la façade 20 est simple et économique à mettre en œuvre, sans risque de rebut, par une mise en place facile des crochets 24 dans des boutonnières 50, ne nécessitant pas d'outillage ni de de qualification particulière. Ce procédé d'assemblage peut être standard quel que soit le matériau souple utilisé.

De plus cette tension du matériau souple est naturelle, en laissant chaque élément se modifier légèrement en fonction des variations climatiques, sans perdre cette tension qui garantit dans le temps une forme lisse et sans irrégularité.

On peut facilement réaliser une diversité de système de coiffe, avec des coiffes 4 comportant des matériaux et des couleurs variés posés sur la façade 20. On notera que l'on peut facilement changer la coiffe 4 en la décrochant de la façade 20, par exemple pour réaliser une réparation ou une personnalisation du véhicule.

En variante les languettes 40 peuvent être réalisées dans une pièce indépendante, comme un ruban pris dans les coutures 12, afin d'obtenir le même effet. En complément le ruban peut être élastique en ajoutant par son élasticité un effet de tension.

## Revendications

1. Système de coiffe prévu pour un levier de commande de transmission disposé sur une console de l'habitacle d'un véhicule automobile, ce système comprenant une façade (20) prévue pour se fixer sur la console, présentant autour d'une ouverture (30) pour le passage du levier des faces sensiblement planes (26, 28), et comprenant une coiffe (4) en matériau souple recevant à l'intérieur la partie inférieure du levier, la base de cette coiffe étant plaquée sur le dessus de ces faces planes (26, 28), dans lequel l'intérieur de la coiffe (4) comporte vers le bas des languettes (48) qui sont fixées en dessous de la façade (20), sur les côtés de faces planes à recouvrir (26, 28), et qui appliquent sur la base de la coiffe (4) des tractions, les languettes (48) étant constituées par des pièces rapportées sur la coiffe (4), **caractérisé en ce que** les pièces rapportées formant les languettes (48) sont fixées à la coiffe (4) par des coutures (12) attachant différentes parties en matériaux souples (6, 8, 10) de cette coiffe (4) entre elles.

2. Système de coiffe selon l'une quelconque des revendications précédentes, **caractérisé en ce que** les languettes (48) sont élastiques.

3. Système de coiffe selon l'une quelconque des revendications précédentes, **caractérisé en ce que** les languettes (48) comportent des perçages (50) de fixation sur des crochets (24) de la façade (20).

4. Système de coiffe selon l'une quelconque des revendications précédentes, **caractérisé en ce que** la façade (20) comporte à l'avant ou à l'arrière une face sensiblement plane (26, 28) transversale recouverte.

5. Système de coiffe selon la revendication 4, **caractérisé en ce que** la coiffe (4) comporte une partie arrière (6), deux parties latérales (8) et une partie avant (10), les languettes (48) étant au bord de coutures (12) reliant les parties latérales (8) à cette partie arrière (6) ou avant (8).

6. Système de coiffe selon l'une quelconque des revendications précédentes, **caractérisé en ce qu'**il comporte des languettes (48) disposées de manière symétrique par rapport à un plan longitudinal (P) du véhicule.

7. Véhicule automobile équipé d'un levier de commande d'une transmission disposé sur une console de l'habitacle, **caractérisé en ce que** ce levier de commande est recouvert par un système de coiffe selon l'une quelconque des revendications précédentes.

## Patentansprüche

1. Kappensystem für einen Getriebesteuerhebel, der an einer Konsole des Fahrgastraums eines Kraftfahrzeugs angeordnet ist, dieses System mit einer Fassade (20), die dazu bestimmt ist, an der Konsole befestigt zu werden, die um eine Öffnung (30) für den Durchgang des Hebels herum im Wesentlichen ebene Flächen (26, 28) aufweist und eine Abdeckung (4) aus flexiblem Material umfasst, die innen aufnimmt der untere Teil des Hebels, wobei die Basis dieser Kappe gegen die Oberseite dieser ebenen Flächen (26, 28) gedrückt wird, wobei die Innenseite der Kappe (4) nach unten hin Laschen (48) aufweist, die unterhalb der Fassade befestigt sind (20), an den Seiten der abzudeckenden ebenen Flächen (26, 28), die an der Basis der Kappe (4) der Griffe anliegen, wobei die Laschen (48) durch an der Kappe (4) befestigte Teile gebildet werden, **dadurch gekennzeichnet, dass** die die Laschen (48) bildenden Einsätze an der Kappe (4) befestigt sind durchNähte (12), die verschiedene Teile aus flexiblen Materialien (6, 8, 10) dieser Kappe (4) aneinander befestigen.

2. Kappensystem nach einem der Ansprüche vorherige, **dadurch gekennzeichnet, dass** die Zungen (48) elastisch sind.

3. Kappensystem nach einem der Ansprüche oben, **dadurch gekennzeichnet, dass** die Laschen (48) Löcher (50) zum Befestigen an Haken (24) der Fassade (20) aufweisen.

4. Kappensystem nach einem der vorhergehenden Ansprüche, **dadurch gekennzeichnet, dass** die Vorderseite (20) vorne oder hinten eine im Wesentlichen ebene Fläche (26, 28) quer abgedeckt umfasst.

5. Kappensystem nach Anspruch 4, **dadurch gekennzeichnet, dass** der Bezug (4) aus einem Rückteil (6), zwei Seitenteilen (8) und einem Vorderteil (10) besteht, wobei die Laschen (48) am Rand von Nähten liegen (12) Verbinden der Seitenteile (8) mit diesem Hinterteil (6) oder Vorderteil (8).

6. Kappensystem nach einem der Ansprüche oben, **dadurch gekennzeichnet, dass** er Zungen (48) umfasst, die symmetrisch bezüglich einer Längsebene (P) des Fahrzeugs angeordnet sind.

7. Kraftfahrzeug, das mit einem an einer Konsole des Fahrgastraums angeordneten Schalthebel eines Getriebes ausgestattet ist, **dadurch gekennzeichnet, dass** dieser Schalthebel durch ein Abdecksystem nach einem der vorhergehenden Ansprüche abgedeckt ist.

## Claims

1. Cap system provided for a transmission control lever arranged on a console of the passenger compartment of a motor vehicle, this system comprising a facade (20) intended to be fixed on the console, having around an opening (30) for the passage of the lever, substantially flat faces (26, 28), and comprising a cover (4) of flexible material receiving at inside the lower part of the lever, the base of this cap being pressed against the top of these flat faces (26, 28), in which the inside of the cap (4) comprises tabs (48) downwards which are fixed below the facade (20), on the sides of flat faces to be covered (26, 28), and which apply to the base of the cap (4) traction, the tabs (48) being formed by parts attached to the cap (4), **characterized in that** the inserts forming the tabs (48) are fixed to the cap (4) byseams (12) attaching different parts of flexible materials (6, 8, 10) of this cover (4) to each other.

2. Cap system according to any one of claims previous ones, **characterized in that** the tongues (48) are elastic.

3. Cap system according to any one of claims above, **characterized in that** the tabs (48) have holes (50) for fixing to hooks (24) of the facade (20).

4. Cap system according to any one of the preceding claims, **characterized in that** the front (20) comprises at the front or at the rear a substantially planar face (26, 28) covered transversely.

5. Cap system according to claim 4, **characterized in that** the cover (4) comprises a rear part (6), two side parts (8) and a front part (10), the tabs (48) being at the edge of seams (12) connecting the side parts (8) to this rear part (6) or front part (8).

6. Cap system according to any one of claims above, **characterized in that** it comprises tongues (48) arranged symmetrically with respect to a longitudinal plane (P) of the vehicle.

7. Motor vehicle equipped with a control lever of a transmission arranged on a console of the passenger compartment, **characterized in that** this control lever is covered by a cover system according to any one of the preceding claims.
